# EUROPÄISCHE PATENTSCHRIFT

(11) **EP 1 702 516 B1**
(45) Veröffentlichungstag und Bekanntmachung des Hinweises auf die Patenterteilung: **11.04.2007**
(21) Anmeldenummer: 05003438.8
(22) Anmeldetag: 17.02.2005
(51) Int. Cl.: A23G 4/00, C01G 23/047, B01J 35/00, B01J 19/12

(54) **Abbaubare Kaugummimassen**
Biodegradable chewing gum bases
Bases de gomme à mâcher biodegradables

(43) Veröffentlichungstag der Anmeldung: 20.09.2006
(73) Patentinhaber: Wacker Polymer Systems GmbH & Co. KG, 84489 Burghausen (DE)
(72) Erfinder: Gräwe, René, 84489 Burghausen (DE); Wimmer, Thomas, Dr., 84489 Burghausen (DE)
(74) Vertreter: Schuderer, Michael

(56) Entgegenhaltungen:
- US-A- 5 242 880
- DATABASE WPI Section Ch, Week 199045 Derwent Publications Ltd., London, GB; Class B06, AN 1990-338057 XP002337054 & JP 02 242640 A (HATTORI K) 27. September 1990 (1990-09-27)

## Beschreibung

Die Erfindung betrifft abbaubare Kaugummimassen und Verfahren zu deren Herstellung.

Ein großes Problem bei der Verwendung von Kaugummi ist die Tatsache, dass der Kaugummi nach Gebrauch nicht umweltverträglich in Abfallbehälter oder Papierkörbe entsorgt wird, sondern achtlos beispielsweise auf Gehsteigen ausgespuckt wird. Derartig entsorgter Kaugummi bindet aufgrund seiner Klebrigkeit Staub, verfärbt sich ins Schwarze und bildet häßliche schwarze Flecken. Die heute auf Basis von synthetischen Polymeren hergestellten Kaugummimassen verrotten nicht unter den bei uns üblichen Witterungsbedingungen und können auch nicht mit den herkömmlichen Methoden zur Strassenreinigung entfernt werden.

Es besteht daher schon seit langem das Bedürfnis entweder die Kaugummimassen so zu modifizieren, dass sie leichter entfernbar werden (easy removable gum base) oder die Kaumgummimassen so zu modifizieren, dass diese chemisch abbaubar sind (biodegradable gum base). Aus dem Stand der Technik ist bekannt, zur Förderung der Bioabbaubarkeit die Kaugummimassen mit Polyestern zu modifizieren (EP-A 711506, WO-A 02/76232). In der US-B 6599542 wird zur Förderung der biologischen Abbaubarkeit die Kaugummimasse mit Proteinen modifiziert. In der US-A 5366740 wird Gluten zur Verbesserung der biologischen Abbaubarkeit der Kaugummimasse beigegeben.

Nachteilig dabei ist, dass diese Zusatzstoffe normalerweise in Kaugummimassen nicht enthalten sind und somit eine Umstellung der Reptur bedingen. Darüberhinaus können negative Effekte bezüglich Geschmack und Kaueigenschaften auftreten. **In der JP-A 2242640 wird TiO₂ in Kaugummiformulierungen zur Zersetzung von bakteriellen Zahnbelägen eingesetzt.**

Es bestand daher die Aufgabe, Kaugummimassen so zu modifizieren, dass deren Abbaubarkeit gefördert wird ohne dass die genannten negativen Begleiterscheinungen auftreten.

Gegenstand der Erfindung sind abbaubare Kaugummimassen enthaltend Elastomer, Polymerharz, Füllstoff und weitere Zusatzstoffe, dadurch gekennzeichnet, dass der Füllstoffanteil ganz oder teilweise durch Titandioxid in der Anatas-Modifikation als optisch aktive Füllstoff ersetzt ist.

Unter optisch aktiven Füllstoffen sind dabei solche zu verstehen, welche die Zersetzung von organischen Molekülen bei UV-Bestrahlung mittels Photokatalyse induzieren, und damit der Abbau des Elastomer- und Polymeranteils in der Kaugummimasse gefördert wird.

Besonders bevorzugt wird nano-Anatas, das ist Anatas mit einer Partikelgröße von vorzugsweise 2 nm bis 15 nm.

Geeignete Elastomere für Kaugummimassen sind Polyisobutylene, Isobutylen-Isopren-Copolymere, Styrol-Butadien-Copolymere sowie Naturkautschuk. Der Elastomeranteil beträgt im allgemeinen 10 bis 50 Gew.-%, bezogen auf das Gesamtgewicht der Kaugummimasse.

Beispiele für Polymerharze sind Polyvinylacetat, Vinylacetat-Vinyllaurat-Copolymere sowie Ethylen-Vinylacetat-Copolymere. Der Anteil an Polymerharz beträgt im allgemeinen 10 bis 60 Gew.-%, bezogen auf das Gesamtgewicht der Kaugummimasse.

Geeignete Füllstoffe sind Magnesiumcarbonat, Calciumcarbonat, Magnesiumsilikate, Aluminiumsilikate, Talkum, Titandioxid, Calciumphosphat sowie Celluloseether. Der Füllstoffanteil in der Formulierung beträgt im allgemeinen 10 bis 40 Gew.-%, bezogen auf das Gesamtgewicht der Kaugummimasse.

Der Füllstoffanteil wird erfindungsgemäß ganz oder teilweise durch optisch aktive Füllstoffe ersetzt. Vorzugsweise wird der Füllstoffanteil teilweise durch optisch aktive Füllstoffe ersetzt. Besonders bevorzugt beträgt der Anteil an optisch aktiven Füllstoffen 1 bis 20 Gew.-%, am meisten bevorzugt 5 bis 15 Gew.-%, jeweils bezogen auf das Gesamtgewicht der Kaugummimasse.

Weitere Zusatzstoffe sind Wachse wie Paraffinwachs oder Polyethylenwachs, Weichmacher wie Kolophoniumharze oder Terpenharze , gehärtete Fette oder Glycerintriacetat, Antioxidantien, Geschmacksstoffe und Farbstoffe. Die Einsatzmengen dieser Zusatzstoffe sind dem Fachmann bekannt.

Es sei darauf hingewiesen, dass sich die in Gew.-% benannten Einsatzmengen der Bestandteile der Kaugummimasse in der Rezeptur jeweils auf 100 Gew.-% aufaddieren.

Die Herstellung von Kaugummimassen erfolgt mit den dafür üblichen Verfahren. Im allgemeinen werden die Bestandteile der Kaugummimasse, gegebenenfalls nach einem vorgeschalteten Granulier- oder Pulverisierungsschritt, vermischt, dann die Mischung auf üblicherweise 70°C bis 150°C erhitzt, im allgemeinen bis zu deren Schmelze, und anschließend die Kaugummimasse extrudiert oder in Form gegossen.

Die nachfolgenden Beispiele dienen der weiteren Erläuterung der Erfindung.

Es wurden Kaugummimassen der nachfolgenden Zusammensetzung hergestellt:

### Vergleichsbeispiel 1:

| Bestandteile | | in Gew.-% |
|---|---|---|
| 1 Elastomer | Isobutylen/Isopren-Copo (Exxon Butyl 007) | 7.6 |
| 2 Elastomer | Polyisobutylen (Vistanex M03399) | 5.4 |
| 3 Polymerharz | Polyvinylacetat (Vinnapas B 1.5sp) | 27.2 |
| 4 Füllstoff | Calciumcarbonat (Omycarb 4 BG) | 25.0 |
| 5 Weichmacher | Kolophonium (DG Dertopoline CG) | 19.6 |
| 6 Wachs | Paraffin (TerHell 2528) | 9.8 |
| 7 Softener | Glycerintriacetat (Cognis Edenor GTA) | 5.4 |
| | Summe: | 100.0 |

Die Bestandteile 1, 2 und 4 wurden bei 120°C homogen verknetet und nach Zugabe von Bestandteil 3 auf 100°C eingestellt. Dann wurde Bestandteil 5 homogen eingeknetet, anschließend die Komponenten 6 und 7 bei 100°C homogen eingeknetet. Die Knetzeit betrug insgesamt 1.5 Stunden.

### Beispiel 2:

| Bestandteile | | in Gew.-% |
|---|---|---|
| 1 Elastomer | Isobutylen/Isopren-Copo (Exxon Butyl 007) | 7.6 |
| 2 Elastomer | Polyisobutylen (Vistanex M03399) | 5.4 |
| 3 Polymerharz | Polyvinylacetat (Vinnapas B 1.5sp) | 27.2 |
| 4 Füllstoff | Calciumcarbonat (Omycarb 4 BG) | 20.0 |
| 4 Füllstoff | nano-Anatas (Hombikat UV 100) | 5.0 |
| 5 Weichmacher | Kolophonium (DG Dertopoline CG) | 19.6 |
| 6 Wachs | Paraffin (TerHell 2528) | 9.8 |
| 7 Softener | Glycerintriacetat (Cognis Edenor GTA) | 5.4 |
| | Summe: | 100.0 |

Die Herstellung der Kaugummimasse erfolgte analog dem Vergleichsbeispiel 1.

### Beispiel 3:

| Bestandteile | | in Gew.-% |
|---|---|---|
| 1 Elastomer | Isobutylen/Isopren-Copo (Exxon Butyl 007) | 7.6 |
| 2 Elastomer | Polyisobutylen (Vistanex M03399) | 5.4 |
| 3 Polymerharz | Polyvinylacetat (Vinnapas B 1.5sp) | 27.2 |
| 4 Füllstoff | Calciumcarbonat (Omycarb 4 BG) | 15.0 |
| 4 Füllstoff | nano-Anatas (Hombikat UV 100) | 10.0 |
| 5 Weichmacher | Kolophonium (DG Dertopoline CG) | 19.6 |
| 6 Wachs | Paraffin (TerHell 2528) | 9.8 |
| 7 Softener | Glycerintriacetat (Cognis Edenor GTA) | 5.4 |
| | Summe: | 100.0 |

Die Herstellung der Kaugummimasse erfolgte analog dem Vergleichsbeispiel 1.

### Beispiel 4:

| Bestandteile | | in Gew.-% |
|---|---|---|
| 1 Elastomer | Isobutylen/Isopren-Copo (Exxon Butyl 007) | 7.6 |
| 2 Elastomer | Polyisobutylen (Vistanex M03399) | 5.4 |
| 3 Polymerharz | Polyvinylacetat (Vinnapas B 1.5sp) | 27.2 |
| 4 Füllstoff | Calciumcarbonat (Omycarb 4 BG) | 20.0 |
| 4 Füllstoff | Anatas (Hombitan) | 5.0 |
| 5 Weichmacher | Kolophonium (DG Dertopoline CG) | 19.6 |
| 6 Wachs | Paraffin (TerHell 2528) | 9.8 |
| 7 Softener | Glycerintriacetat (Cognis Edenor GTA) | 5.4 |
| | Summe: | 100.0 |

Die Herstellung der Kaugummimasse erfolgte analog dem Vergleichsbeispiel 1.

### Beispiel 5:

| Bestandteile | | in Gew.-% |
|---|---|---|
| 1 Elastomer | Isobutylen/Isopren-Copo (Exxon Butyl 007) | 7.6 |
| 2 Elastomer | Polyisobutylen (Vistanex M03399) | 5.4 |
| 3 Polymerharz | Polyvinylacetat (Vinnapas B 1.5sp) | 27.2 |
| 4 Füllstoff | Calciumcarbonat (Omycarb 4 BG) | 15.0 |
| 4 Füllstoff | Anatas (Hombitan) | 10.0 |
| 5 Weichmacher | Kolophonium (DG Dertopoline CG) | 19.6 |
| 6 Wachs | Paraffin (TerHell 2528) | 9.8 |
| 7 Softener | Glycerintriacetat (Cognis Edenor GTA) | 5.4 |
| | Summe: | 100.0 |

Die Herstellung der Kaugummimasse erfolgte analog dem Vergleichsbeispiel 1.

Testung der Abbaubarkeit der Kaugummimassen aus (Vergleichs)-beispiel 1 bis 5:

Die Kaugummimassen aus den (Vergleichs)beispielen wurden zu 2mm dicken Platten ausgewalzt und anschließend auf Metallplatten mit den Abmessungen 6 cm x 20 cm aufgeklebt.
Die Bewitterung wurde analog DIN EN ISO 4892 getestet, wobei ein Zyklus durchlaufen wurde, bei dem sich 2 Stunden Betauung bei 40°C mit 6 h Belichtung mit Q-UVB bei 45°C ablösten. Insegesamt wurde der Zyklus solange durchlaufen bis eine Belichtungsdauer von 2500 Stunden erreicht war.

Der Abbau der Kaugummimassen geht mit zunehmender Kreidung der Oberfläche einher. Es wurde daher die Kreidung der Oberflächen der Testplatten vor der Bewitterung und nach der Bewitterung jeweils visuell bestimmt und mit einem Schulnotensystem von 1 bis 6 qualitativ beurteilt, wobei 1 = starke Kreidung und 6 = keine Kreidung.

Die Ergebnisse sind in Tabelle 1 zusammengefasst:

| Beispiel | Kreidung vor Bewitterung | Kreidung nach Bewitterung |
|---|---|---|
| V.bsp. 1 | 6 | 6 |
| Beispiel 2 | 6 | 3 |
| Beispiel 3 | 6 | 1 |
| Beispiel 4 | 6 | 4 |
| Beispiel 5 | 6 | 2 |

Die Testergebnisse zeigen, dass ohne photoaktive Füllstoffe kein Abbau der Kaugummimasse erfolgt (Vergleichsbeispiel 1). Bei den mit Anatas modifizierten Kaugummimassen war deutliche Kreidung, das heißt ein deutlicher Abbau der Kaugummimasse, erkennbar. Die besten Ergebnisse wurden mit nano-Anatas erhalten (Beispiel 2/3).

## Patentansprüche

1. Abbaubare Kaugummimassen enthaltend Elastomer, Polymerharz, Füllstoff und weitere Zusatzstoffe, **dadurch gekennzeichnet dass** der Füllstoffanteil ganz oder teilweise durch Titandioxid in der Anatas-Modifikation als optisch aktivem Füllstoff ersetzt ist.

2. Abbaubare Kaugummimassen nach Anspruch 1, **dadurch gekennzeichnet, dass** als photoaktiver Füllstoff nano-Anatas eingesetzt wird.

3. Abbaubare Kaugummimassen nach Anspruch 1 bis 2, **dadurch gekennzeichnet, dass** der Anteil an optisch aktiven Füllstoffen 1 bis 20 Gew.-% beträgt, bezogen auf das Gesamtgewicht der Kaugummimasse.

4. Verfahren zur Herstellung der abbaubare Kaugummimassen nach Anspruch 1 bis 3, wobei die Bestandteile der Kaugummimasse, gegebenenfalls nach einem vorgeschalteten Granulier- oder Pulverisierungsschritt, vermischt werden, die Mischung erhitzt wird, und anschließend die Kaugummimasse extrudiert oder in Form gegossen wird.

## Claims

1. Degradable chewing gum bases comprising elastomer, polymer resin, filler and further additives, **characterized in that** the filler portion is entirely or partially replaced by titanium dioxide in the anatase modification as an optically active filler.

2. Degradable chewing gum bases according to Claim 1, **characterized in that** the photoactive filler used is nano-anatase.

3. Degradable chewing gum bases according to Claim 1 to 2, **characterized in that** the proportion of optically active filler is 1 to 20% by weight, based on the total weight of the chewing gum base.

4. Method for producing the degradable chewing gum bases according to Claim 1 to 3, which comprises mixing the constituents of the chewing gum base, if appropriate after an upstream granulation or pulverization step, heating the mixture, and then extruding the chewing gum base or casting it in a mould.

## Revendications

1. Bases de gomme à mâcher biodégradables, contenant un élastomère, une résine polymère, une charge et d'autres additifs, **caractérisées en ce que** la fraction de charge est remplacée en tout ou en partie par du dioxyde de titane sous sa forme anatase en tant que charge optiquement active.

2. Bases de gomme à mâcher biodégradables selon la revendication 1, **caractérisées en ce que** l'on met en oeuvre de la nano-anatase en tant que charge photoactive.

3. Bases de gomme à mâcher biodégradables selon les revendications 1 à 2, **caractérisées en ce que** la fraction de charge optiquement active est de 1 à 20% en poids, par rapport au poids total de la base de gomme à mâcher.

4. Procédé de préparation des bases de gomme à mâcher biodégradables selon les revendications 1 à 3, dans lequel les constituants de la base de gomme à mâcher, éventuellement après une étape de granulation ou de pulvérisation en amont, sont mélangés, le mélange est chauffé et la base de gomme à mâcher est ensuite extrudée ou coulée en moule.
